# EUROPEAN PATENT SPECIFICATION

(11) **EP 1 310 752 B1**
(45) Date of publication and mention of the grant of the patent: **01.02.2006**
(21) Application number: 01830690.2
(22) Date of filing: 08.11.2001
(51) Int. Cl.: F25D 31/00, F16L 3/223

(54) **Device for the geometric stabilisation of dual plan spiral evaporators for drink distribution systems**
Vorrichtung zur geometrischen Stabilisierung von doppelten Spiralverdampfern für Getränkespender
Dispositif pour la stabilisation géométrique des évaporateurs du type à double spirale pour des appareils de distribution de boissons

(43) Date of publication of application: 14.05.2003
(73) Proprietor: CELLI S.p.A., 47852 Coriano (Rimini) (IT)
(72) Inventor: Castaldi, Bruno, 47030 San Mauro Pascoli (Rimini) (IT)
(74) Representative: Lanzoni, Luciano

(56) References cited:
- EP-A- 0 837 028
- EP-A- 1 132 336
- CA-A- 1 207 289
- US-A- 4 671 347
- PATENT ABSTRACTS OF JAPAN vol. 2000, no. 07, 29 September 2000 (2000-09-29) -& JP 2000 120935 A (NIFCO INC), 28 April 2000 (2000-04-28)

## Description

The present invention relates to a dual plan spiral evaporator according to the preamble of claim 1.

This kind of evaporator is called "dual plan" because they comprise their own tube bundle with spiral conformation, with coils that alternately follow each other, with plan of greater and lesser surface and hence which spatially identify respectively outer and inner tubular segments.

Dual plan evaporators are also those provided with a tube bundle comprising two concentric spirals, with coils according to two different measures.

This need to increase as much as possible the lateral tube thickness stems from the fact that the cooling systems of this kind, known in the art as "Post-Mix" or "Pre-Mix", comprise cooling tanks, which contain the evaporator, of limited height.

Therefore, in order adequately to cool the fluid of the tank reliance is made at least on a suitable thickness of the spiral tube bundle, whereon an equally adequate thickness of ice will be formed. However, this solution has the drawback of forcing necessarily geometrically to stabilise dual plan evaporators, particularly unstable.

Attempts have been made to overcome this drawback with the aforesaid vertical comb supports, provided with a plurality of front slits with horizontal development, applicable with horizontal coupling on the corresponding tubular segments of the evaporator coils, trying to stabilise them by means of simple contours corresponding to the section of the tubular segments, obtained along each slit.

However, even when used in the number of at least six for each evaporator (two for two sides and one for each of the remaining sides), they have not proven to be completely effective, the possibility remaining of at least the rotation of the tube bundle and of the freeing of the tube segments from their respective housing seats, especially when the evaporator must be mounted, demounted or in any case is subjected to stresses.

Either the Canadian patent CA1207289 or the European Patent Application EP1132336 disclose a beverage dispensing device having a cooling chamber, in which coils are held in position by uprights which are notched to receive individual coils and shaped each to receive a vertical rod to trap the coils in the notches of the upright.

The aim of the present invention is to overcome the drawback described above, making available a and plan spiral evaporator having the features of claim 1.

Further characteristics and advantages of the present invention, which shall become more readily apparent from the description that follows are achieved, in accordance with the present invention, by a dual plan spiral evaporator as set out in the claims.

The invention is disclosed in greater detail hereafter with the aid of the drawings, which represent an embodiment provided purely by way of non limiting example:
- Figure 1 shows a perspective view, with some parts removed the better to highlight others, of a cooling tank containing a dual plan spiral evaporator, with rectangular coils with radiused vertices, using devices of the type in question;

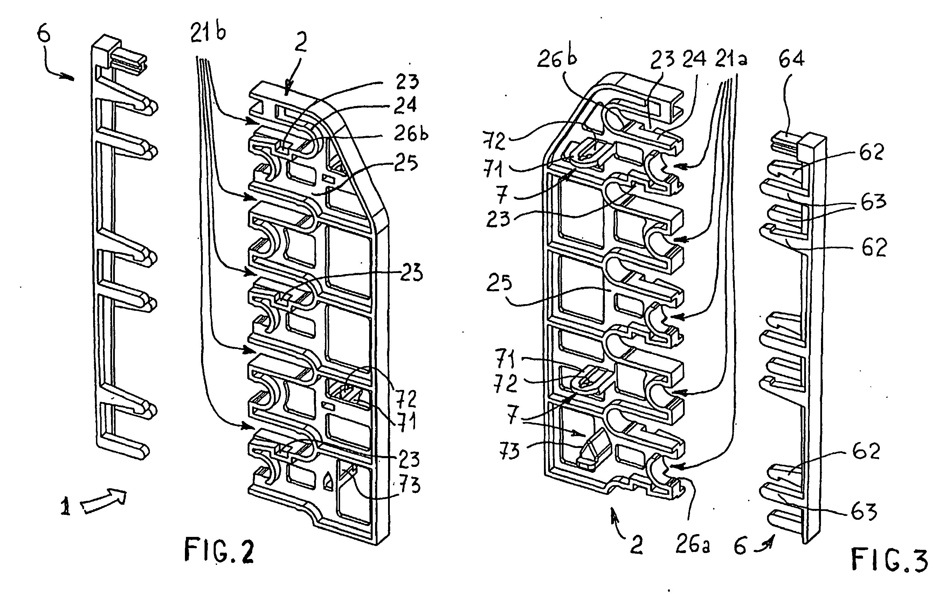

- Figures 2 and 3 show respective perspective views from one side and from the other side of the two uncoupled components of the subject device, in an embodiment that is slightly different but functionally identical to that of Figure 1 and without the thermostat sensor.

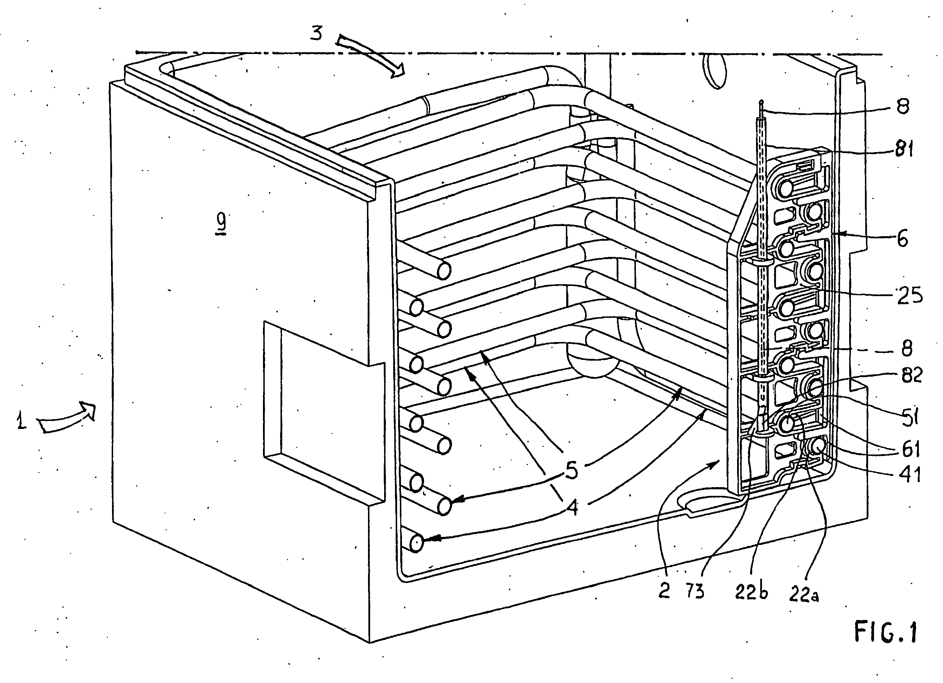

With reference to Figure 1, a cooling tank (9) is shown, in this case of a "Post-Mix" or "Pre-Mix" system, which contains an evaporator (3) of the kind with its own tube bundles having spiral conformation, with coils (4, 5) that alternately follow each other, with a plan having greater area (coils 4) and lesser area (coils 5) and hence that spatially identify tubular segments (41, 51) that are respectively outer (41) and inner (51).

The device (1) for stabilising said tube bundle is of the kind constituted by a vertical comb support (2) whose height corresponds to that of the evaporator (3) and is generically provided with a plurality of frontal slits (21a, 21b) with horizontal development, able to house and hold in their interior the corresponding tubular segments (41, 51) of each coil (4, 5) of the evaporator. The support (2) can be applied with horizontal coupling on all corresponding tubular segments (41, 51) of the coils (4, 5) of the evaporator. This conformation identifies the so-called "dual plan" evaporators. Naturally, the category of dual plan evaporators also includes those provided with a tube bundle that comprises two concentric spirals, with coils according to two different measures (in this case needing two compressors and in general two distinct cooling systems).

In the subject invention, the aforesaid generic slits (21a, 21b) actually comprise first and second slits (21a) and (21b) with a depth that is alternately differentiated according to two different measures corresponding to the position, in space, of the two plans of the coils (4, 5) of the spiral evaporator (3). Hence the first slits (21a) have a depth of a lesser measure than the second slits (21b) which alternate with the first, the two different measures corresponding to the position, in space, of the two plans of the coils (4, 5) of the spiral evaporator (3). Each first or second slit (21a) or (21b) also comprises corresponding contours (26a) or (26b) able to contribute to the stable holding of the tubular segments (41, 51).

To provide a further definitive stabilisation, the device (1) comprises a vertical closure element (6), able to be coupled by snapping frontally on the vertical comb support (2), in such a way as to enclose the tubular segments (41, 51) of each coil (4, 5) of the evaporator (3) in spirals inside closed first and second seats (22a) and (22b) peripherally defined by the contour of the corresponding first and second slits (21a) and (21b), as well as by the edge (61) of the vertical closure element (6). Also for a better stabilisation of the evaporator, the first seats (22a) are advantageously contoured in such a way as to maintain the tubular segments (41) enclosed therein substantially motionless at least transversely to their section.

Specifically, the vertical closure element (6) is snapped on the comb support (2) by means of at least a series of latching projections (62) provided with a predetermined flexibility, which grip onto corresponding latching seats (23) in which said projections find stable seat after being forcibly thrust towards them. The latching projections (62) are preferably obtained on the closure element (6) and the corresponding latching seats (23) on the vertical comb support and at least on a side of the vertical comb support (2).

Moreover, the comb support (2) has a front frame (24) of suitable width, in correspondence with which and to the side of at least said second slits (21 b) are obtained the latching seats (23).

Preferably, the latching projections (62) are obtained alternately at opposite sides relative to a central median plane intersecting the closure element (6) and the corresponding latching seats (23) are obtained parallel alternately at one and the other side of the vertical comb support (2).

It is also preferable for each latching projection (62) to be provided, at its side, with a lateral abutment element (63), distanced from the projection (62) by a measure corresponding to the thickness of the base plane (25) of the vertical comb support (2).

In this way the latching operation is particularly balanced and facilitated.

Moreover the closure element (6) comprises at least an alignment and guidance projection (64) for the mutual coupling between the closure element (6) and the vertical comb support (2).

Very advantageously, moreover, the device (1) comprises, integrally therewith, elements (7) able to provide stable, but removable, vertical support to a sensor (8) of a thermostat, in the case in question of the type comprising a vertical tubular element (81), containing the sensor (8) and provided with a lower flattened end (82).

In particular, the elements (7) able to support the sensor (8) comprise at least a pair of brackets (71) provided with a slit for the oriented transit of the tubular element (81) and with a base element (73) shaped as a wedge, in order to force the tubular element (81), once it is inserted through said pair of brackets (71), to rotate automatically by such an angle as to prevent its egress, unless it is preventively counter-rotated by the same angle, after raising it enough to free it from the wedge-shaped base element (73). Simultaneously, if one were to extract only the sensor (8) (usually in the form of a capillary tube), in this case it would advantageously be sufficient to exert force thereon, which will be extracted without being followed by the tubular element (81) that contains it: until said tubular element is counter-rotated as mentioned above, it will not be possible to extract it because of the geometric interference that its flattened lower end (82) would exert on the brackets (71), without being able to be extracted therefrom.

Lastly, the dual plan spiral evaporator in question, which is of the type with substantially square or rectangular plans with radiused vertices, comprises at least six geometric stabilisation devices (1), whereof four are applicable in correspondence with the vertices of the two plans and the remaining two substantially in correspondence with the centre line of two opposite sides, in order to inhibit sliding, rotations and any deformation of the coils (4, 5) of the evaporator (3), when they are subjected to any stresses.

## Claims

1. Dual plan spiral evaporator for drink distribution systems of the type comprising its own tube bundle with spiral configuration, with coils (4,5) that alternately follow each other, with plan of greater and lesser surface and which spatially identify respectively outer (41) and inner (51) tubular segments and also comprising a device (1) for the geometric stabilisation of the tube bundle, of the kind constituted by a vertical comb support (2) of a height corresponding to that of the evaporator (3), having a base plane (25) and provided with a plurality of frontal slits (21) with horizontal development, applicable with horizontal coupling on all the corresponding tubular segments (41, 51) of the coils (4, 5) of the evaporator, mutually superposed and with plan having alternately greater and lesser surface area, **characterised in that** the slits (21) comprise first slits (21a) with a lesser depth than that of second slits (21b) which alternate with the first slits, the two different measures corresponding to the position, in space, of the two plans of the coil (4, 5) of the spiral evaporator.

2. Dual plan spiral evaporator as claimed in claim 1, **characterised in that** the device (1) comprises a vertical closure element (6), able to provide a further definitive stabilisation, able to be coupled by frontally snapping onto the vertical comb support (2), in such a way as to enclose the tubular segments (41, 51) of each coil (4, 5) of the spiral evaporator (3) inside first and second closed seats (22a, 22b) defined peripherally by the contour of the corresponding first and second slits (21a, 21b), as well as by the edge (61) of the vertical closure element (6).

3. Dual plan spiral evaporator as claimed in claim 1 or 2, **characterised in that** it comprises a sensor (8) of a thermostat and also **characterised in that** the device (1) for the geometric stabilisation comprises, integrally therewith, elements (7) able to provide stable, but removable, support to the sensor (8) of a thermostat.

4. Dual plan spiral evaporator as claimed in claim 2, **characterised in that** at least the first seats (22a) are so contoured as to maintain the tubular segments (41) enclosed therein substantially motionless at least transversely to their section.

5. Dual plan spiral evaporator as claimed in claim 2 or 4, **characterised in that** the vertical closure element (6) is applied by snapping onto the comb support (2) by means of at least a series of latching projections (62) provided with a predetermined flexibility, which grip on corresponding latching seats (23) in which said projections find stable seat after being forcibly pushed towards them.

6. Dual plan spiral evaporator as claimed in claim 5, **characterised in that** the latching projections (62) are obtained on the closure element (6) and the corresponding latching seats (23) on the vertical comb support (2).

7. Dual plan spiral evaporator as claimed in claim 6, **characterised in that** the latching seats (23) are obtained at least on a side of the vertical comb support (2).

8. Dual plan spiral evaporator as claimed in claim 7, **characterised in that** the comb support (2) has a frontal frame (24) of suitable width, in correspondence with which and to the side of at least said second slits (21b) are obtained the latching seats (23).

9. Dual plan spiral evaporator as claimed in claim 8, **characterised in that** the latching projections (62) are obtained alternately at opposite sides relative to a median central plane intersecting the closure element (6) and **in that** the corresponding latching seats (23) are obtained parallel alternately at one side and at the other side of the vertical comb support (2).

10. Dual plan spiral evaporator as claimed in claim 9, **characterised in that** each latching projection (62) comprises, set side by side thereto, a lateral abutment element (63), distanced from the projection (62) by a measure corresponding to the thickness of the constituting base plane (25) of the vertical comb support.

11. Dual plan spiral evaporator as claimed in any claim from 6 to 10, **characterised in that** the closure element (6) comprises at least an alignment and guidance projection (64) for the mutual coupling between the closure element (6) and the vertical comb support (2).

12. Dual plan spiral evaporator as claimed in claim 3, wherein the sensor (8) is of the type enclosed in a vertical tubular element (81) provided with a flattened lower end (82), **characterised in that** the elements (7) able to support the sensors (8) comprise at least a pair of brackets (71) provided with a slit (72) for the oriented transit of the tubular element (81) and with a base element (73) that is wedge-shaped, in order to force the tubular element (81), once it is inserted through said pair of brackets (71), to rotate automatically by such an angle as to prevent it from egressing, unless it is preventively counter-rotated by the same angle, after raising it sufficiently to free it from the wedge-shaped base element (73).

13. Dual plan spiral evaporator for drink distribution system of the type comprising its own tube bundle with spiral configuration, with coils (4,5) that alternately follow each other, with plan of greater and lesser surface and which spatially identify respectively outer and inner tubular segments (41,51), the evaporator being of the kind with substantially square or rectangular plans with radiused vertices, **characterised in that** it comprises at least six geometric stabilisation devices (1) according to any of the previous claims, whereof four are applicable in correspondence with the vertices of the two plans and the remaining two substantially in correspondence with the centre line of two opposite sides, in such a way as to prevent sliding, rotations and any deformation of the coils (4, 5) of the evaporator (3), when subjected to any stresses.

## Patentansprüche

1. Doppelter Spiralverdampfer für Getränkespendersysteme vom Typ enthaltend sein eigenes Rohrbündel in spiralförmiger Auslegung, mit Windungen (4, 5), die abwechselnd einander folgen, mit Grundrissen von grösserer oder geringerer Fläche, und welche räumlich jeweils äussere (41) und innere (51) Rohrsegmente beschreiben, sowie ebenfalls enthaltend eine Vorrichtung (1) zu geometrischen Stabilisierung des Rohrbündels von der Art, die aus einer vertikalen Kammhalterung (2) von einer Höhe entsprechend der des Verdampfers (3) besteht, aufweisend eine Basisebene (25) und versehen mit einer Anzahl von frontalen Schlitzen (21) mit horizontalem Verlauf, anbringbar durch horizontale Verbindung an allen entsprechenden Rohrsegmenten (41, 51) der Windungen (4, 5) des Verdampfers, gegenseitig übereinanderliegend und mit einem Grundriss von abwechselnd grösserem und geringerem Flächenbereich, **dadurch gekennzeichnet, dass** die Schlitze (21) erste Schlitze (21 a) mit einer geringeren Tiefe als die zweiten Schlitze (21b) enthalten, die sich mit den ersten Schlitzen abwechseln, wobei die beiden verschiedenen Abmessungen der räumlichen Position der beiden Grundrisse der Windung (4, 5) des Spiralverdampfers entsprechen.

2. Doppelter Spiralverdampfer nach Patentanspruch 1, **dadurch gekennzeichnet, dass** die Vorrichtung (1) ein vertikales Verschlusselement (6) enthält, in der Lage, für eine weitere endgültige Stabilisierung zu sorgen, und das durch frontales Einrasten in die vertikale Kammhalterung (2) auf solche Weise mit dieser verbunden wird, dass die rohrförmigen Segmente (41, 51) einer jeden Windung (4, 5) des Spiralverdampfers (3) im Inneren von ersten und zweiten geschlossenen Sitzen (22a, 22b) eingeschlossen werden, beschrieben umlaufend durch den Umriss der entsprechenden ersten und zweiten Schlitze (21a, 21b) sowie durch den Rand (61) des vertikalen Verschlusselementes (6).

3. Doppelter Spiralverdampfer nach Patentanspruch 1 oder 2, **dadurch gekennzeichnet, dass** er einen Fühler (8) eines Thermostats enthält, und auch **dadurch gekennzeichnet, dass** die Vorrichtung (1) zur geometrischen Stabilisierung fest mit ihr verbundene Elemente (7) enthält, in der Lage, eine stabile, jedoch lösbare Halterung für den Fühler (8) eines Thermostats vorzusehen.

4. Doppelter Spiralverdampfer nach Patentanspruch 2, **dadurch gekennzeichnet, dass** wenigstens die ersten Sitze (22a) so profiliert sind, dass die darin eingeschlossenen Rohrsegmente (41) im wesentlichen bewegungslos gehalten werden, wenigstens quer zu ihrem Querschnitt.

5. Doppelter Spiralverdampfer nach Patentanspruch 2 oder 4, **dadurch gekennzeichnet, dass** das vertikale Verschlusselement (6) durch Einrasten an der Kammhalterung (2) befestigt wird, und zwar mit Hilfe von wenigstens einer Serie von Sperrklinken (62), versehen mit einer bestimmten Flexibilität, die in entsprechende Einrastsitze (23) greifen, in welchen die genannten Sperrklinken, nachdem sie zu diesen hin gedrückt worden sind, einen stabilen Halt finden.

6. Doppelter Spiralverdampfer nach Patentanspruch 5, **dadurch gekennzeichnet, dass** die Sperrklinken (62) an dem Verschlusselement (6) und die entsprechenden Einrastsitze (23) an der vertikalen Kammhalterung (2) erhalten sind.

7. Doppelter Spiralverdampfer nach Patentanspruch 6, **dadurch gekennzeichnet, dass** die Einrastsitze (23) wenigstens an einer Seite der vertikalen Kammhalterung (2) erhalten sind.

8. Doppelter Spiralverdampfer nach Patentanspruch 7, **dadurch gekennzeichnet, dass** die Kammhalterung (2) einen frontalen Rahmen (24) von geeigneter Breite aufweist, entsprechend welchem und an der Seite von wenigstens den genannten zweiten Schlitzen (21b) die Einrastsitze (23) erhalten sind.

9. Doppelter Spiralverdampfer nach Patentanspruch 8, **dadurch gekennzeichnet, dass** die Sperrklinken (62) im Verhältnis zu einer mittleren, das Verschlusselement (6) schneidenden Mittelebene an entgegengesetzten Seiten erhalten sind, und **dadurch**, dass die entsprechenden Einrastsitze (23) parallel abwechselnd an der einen Seite und an der anderen Seite der vertikalen Kammhalterung (2) erhalten sind.

10. Doppelter Spiralverdampfer nach Patentanspruch 9, **dadurch gekennzeichnet, dass** jede Sperrklinke (62), Seite an Seite zu dieser angeordnet, ein seitliches Anschlagelement (63) enthält, das um eine Abmessung von der Sperrklinke (62) absteht, die der Stärke der Basisebene (25) der vertikalen Kammhalterung (2) entspricht.

11. Doppelter Spiralverdampfer nach einem beliebigen Patentanspruch von 6 bis 10, **dadurch gekennzeichnet, dass** das Verschlusselement (6) wenigstens einen Ausricht- und Führungsvorsprung (64) zur gegenseitigen Verbindung zwischen dem Verschlusselement (6) und der vertikalen Kammhalterung (2) enthält.

12. Doppelter Spiralverdampfer nach Patentanspruch 3, bei welchem der Fühler (8) von einem in einem vertikalen rohrförmigen Element (81) eingeschlossen Typ ist, das mit einem abgeflachten unteren Ende (81) versehen ist, **dadurch gekennzeichnet, dass** die Elemente (7) zum Halten der Fühler ( 8) wenigstens ein Paar von Bügeln (71) enthalten, die mit einem Schlitz (72) zum ausgerichteten Durchführen des rohrförmigen Elementes (81) versehen sind, sowie mit einem Basiselement (73), das keilförmig ist, um das rohrförmige Element (81) zu zwingen, sobald es durch das genannte Paar von Bügeln (71) eingesetzt ist, sich automatisch um solch einen Winkel zu drehen, dass es am Herausgleiten gehindert ist, wenn es nicht vorher um denselben zurückgedreht wird, nachdem es ausreichend angehoben wurde, um es von dem keilförmigen Basiselement (73) zu befreien.

13. Doppelter Spiralverdampfer für Getränkespendersysteme vom Typ enthaltend sein eigenes Rohrbündel in spiralförmiger Auslegung, mit Windungen (4, 5), die abwechselnd einander folgen, mit Grundrissen von grösserer oder geringerer Fläche, und welche räumlich jeweils äussere (41) und innere (51) Rohrsegmente beschreiben, wobei der Verdampfer vom Typ mit im wesentlichen viereckigen oder rechteckigen Grundrissen mit zusammenlaufenden Spitzen ist, **dadurch gekennzeichnet, dass** er wenigstens sechs geometrische Stabilisiervorrichtungen (1) nach einem jeden der vorstehenden Patentansprüche enthält, von welchen vier an den Spitzen der beiden Grundrisse anbringbar sind und die verbleibenden beiden im wesentlichen entsprechend der Mittellinie der beiden sich gegenüberliegenden Seiten, und zwar auf solche Weise, dass ein Rutschen, Drehen oder jede Verformung der Windungen (4, 5) des Verdampfers (3) verhindert wird, wenn er irgendwelchen Belastungen ausgesetzt ist.

## Revendications

1. Evaporateur du type à double spirale pour des appareils de distribution de boissons, du type comprenant son propre faisceau de tubes avec une configuration à spirale, avec des spires (4, 5) se suivant alternativement entre elles, avec un plan de surface plus et moins grande qui identifie dans l'espace respectivement des portions tubulaires externes (41) et internes (51), et comprenant également un dispositif (1) pour la stabilisation géométrique du faisceau de tube, du type constitué par un support vertical à peigne (2) d'une hauteur correspondant à celle de l'évaporateur (3), ayant un plan de base (25) et pourvu d'une pluralité de fentes frontales (21) à développement horizontal, applicables par accouplement horizontal sur toutes les portions tubulaires (41, 51) correspondantes des spires (4, 5) de l'évaporateur, mutuellement superposées et avec un plan ayant alternativement une surface plus grande et plus petite, **caractérisé en ce que** les fentes (21) comprennent de premières fentes (21a) avec une profondeur inférieure à celle de secondes fentes (21b) s'alternant avec les premières, les deux différentes mesures correspondant à la position, dans l'espace, des deux plans des spires (4, 5) de l'évaporateur à spirale.

2. Evaporateur du type à double spirale selon la revendications 1, **caractérisé en ce que** le dispositif (1) comprend un élément de fermeture vertical (6), apportant une ultérieure stabilisation définitive, pouvant être accouplé par encliquetage frontal sur le support vetical à peigne (2), de manière à renfermer les segments tubulaires (41, 51) de chaque spire (4, 5) de l'évaporateur à spirale (3) à l'intérieur des premiers et seconds logements fermés (22a, 22b) définis périphériquement par le contour des correspondantes premières et secondes fentes (21a, 21b), ainsi que par le bord (61) de l'élément de fermeture vertical (6).

3. Evaporateur du type à double spirale selon la revendication 1 ou 2, **caractérisé en ce qu'**il comprend un capteur (8) d'un thermostat et **en ce que** le dispositif (1) pour la stabilisation géométrique comprend, en tant que partie intégrante, des éléments (7) formant un support stable, mais amovible, pour le capteur (8) d'un thermostat.

4. Evaporateur du type à double spirale selon la revendication 2, **caractérisé en ce qu'**au moins les premiers logements (22a) sont conformés de manière à maintenir les segments tubulaires (41) renfermés en leur intérieur substantiellement immobiles au moins transversalement à leur section.

5. Evaporateur du type à double spirale selon la revendication 2 ou 4, **caractérisé en ce que** l'élément de fermeture vertical (6) est appliqué par encliquetage sur le support vertical à peigne (2) au moyen d'au moins une série de saillies d'accrochage (62) pourvues d'une flexibilité prédéterminée, qui s'accrochent à des logements d'accrochage (23) correspondants dans lesquels lesdites saillies trouvent un logement stable après avoir été forcées vers ces derniers.

6. Evaporateur du type à double spirale selon la revendication 5, **caractérisé en ce que** les saillies d'accrochage (62) sont obtenues sur l'élément de fermeture (6) et les logements d'accrochage correspondants (23) sur le support vertical à peigne (2).

7. Evaporateur du type à double spirale selon la revendication 6, **caractérisé en ce que** les logements d'accrochage (23) sont obtenus au moins sur un côté du support vertical à peigne (2).

8. Evaporateur du type à double spirale selon la revendication 7, **caractérisé en ce que** le support à peigne (2) présente un cadre frontal (24) de largeur adaptée, en correspondance de laquelle et du coté d'au moins lesdites secondes fentes (21b) sont obtenus les logements d'accrochage (23).

9. Evaporateur du type à double spirale selon la revendication 8, **caractérisé en ce que** les saillies d'accrochage (62) sont obtenues alternativement sur des côtés opposés par rapport à un plan central médian intersécant l'élément de fermeture (6) et **en ce que** les logements d'accrochage correspondants (23) sont obtenus parallèlement alternativement sur un côté et sur l'autre côté du support vertical à peigne (2).

10. Evaporateur du type à double spirale selon la revendication 9, **caractérisé en ce que** chaque saillie d'accrochage (62) comprend, côte-à-côte avec elle, un élément de butée latéral (63), espacé de la saillie (62) d'une mesure correspondant à l'épaisseur du plan constitutif de base (25) du support vertical à peigne (2).

11. Evaporateur du type à double spirale selon n'importe laquelle des revendications 6 à 10, **caractérisé en ce que** l'élément de fermeture (6) comprend au moins une saillie d'alignement et de guidage (64) pour l'accouplement mutuel entre l'élément de fermeture (6) et le support vertical à peigne (2).

12. Evaporateur du type à double spirale selon la revendication 3, dans lequel le capteur (8) est du type renfermé dans un élément tubulaire vertical (81) pourvu d'une extrémité inférieure aplatie (82), **caractérisé en ce que** les éléments (7) pouvant supporter les capteurs (8) comprennent au moins une paire d'équerres (71) pourvues d'une fente (72) pour le transit orienté de l'élément tubulaire (81) et avec un élément de base (73) en forme de coin, de manière à contraindre l'élément tubulaire (81), lorsqu'il est inséré au travers de ladite paire d'équerres (71), à pivoter automatiquement d'un angle tel à prévenir sa sortie, à moins qu'il ne soit contre-pivoté du même angle, après l'avoir soulevé suffisamment pour le libérer de l'élément de base en forme de coin (73).

13. Evaporateur du type à double spirale pour des appareils de distribution de boissons du type comprenant son propre faisceau de tubes avec une configuration à spirale, avec des spires (4, 5) qui se suivent alternativement entre elles, avec un plan de surface plus et moins grande et identifiant dans l'espace respectivement des portions tubulaires externes (41) et internes (51), l'évaporateur étant du type avec des plans substantiellement carrés ou rectangulaires avec des sommets raccordés, **caractérisé en ce qu'**il comprend au moins six dispositifs de stabilisation géométrique (1) selon n'importe laquelle des revendications précédentes, quatre desquels étant applicables en correspondance des sommets des deux plans et les deux autres substantiellement en correspondance de la ligne centrale de deux côtés opposés, de manière à prévenir le glissement, les rotations et toute déformation des spires (4, 5) de l'évaporateur (3) lorsqu'il est soumis à des contraintes.
